(19) Europäisches Patentamt
European Patent Office
Office européen des brevets

(11) **EP 4 047 981 A1**

(12) **EUROPEAN PATENT APPLICATION**
published in accordance with Art. 153(4) EPC

(43) Date of publication:
**24.08.2022 Bulletin 2022/34**

(21) Application number: **20877339.0**

(22) Date of filing: **24.09.2020**

(51) International Patent Classification (IPC):
***H04W 28/00*** (2009.01)

(52) Cooperative Patent Classification (CPC):
**H04L 45/121; H04L 43/0864; H04L 43/16;**
**H04L 47/283; H04L 47/56**

(86) International application number:
**PCT/CN2020/117532**

(87) International publication number:
**WO 2021/073394 (22.04.2021 Gazette 2021/16)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **15.10.2019 CN 201910978624**

(71) Applicant: **Beijing Dajia Internet Information**
**Technology Co., Ltd.**
**Beijing 100085 (CN)**

(72) Inventors:
• **GENG, Yufeng**
**Beijing 100085 (CN)**
• **ZHOU, Chao**
**Beijing 100085 (CN)**

(74) Representative: **Mathys & Squire**
**Theatinerstraße 7**
**80333 München (DE)**

(54) **DATA TRANSMISSION METHOD AND APPARATUS, ELECTRONIC DEVICE AND STORAGE MEDIUM**

(57) The present disclosure relates to a data transmission method and apparatus, an electronic device, and a storage medium and relates to the field of network communication technology. The method comprises: acquiring a plurality of pieces of sub-data of data to be transmitted; determining the upper limit of tolerant delay according to the transmission delays of available transmission links, wherein the upper limit of the tolerant delay is greater than the minimum transmission delay among the transmission delays of the available transmission links; calculating, on the basis of the upper limit of the tolerant delay and the transmission delays of the available transmission links, a probability that each of the available transmission links is selected to transmit the sub-data; allocating the sub-data to the available transmission links according to the selection probabilities of the available transmission links, and transmitting the sub-data by means of the available transmission link allocated to the sub-data. Hence, during data transmission using the solution provided in the embodiments of the present disclosure, the overall transmission delay can be reduced, thereby improving the data transmission efficiency.

FIG. 1

## Description

### Cross-Reference of Related Applications

The application claims the priority from Chinese Patent Application No. 201910978624.3, filed with the China National Intellectual Property Administration on October 15, 2019 and entitled "Data Transmission Method and Apparatus, Electronic Device and Storage Medium", which is hereby incorporated by reference in its entirety.

### Field

The disclosure relates to the field of network communication technology, and in particular to a data transmission method and apparatus, an electronic device and a storage medium.

### Background

In streaming media scenarios such as live streaming, video call and voice call, transmission links between different network nodes are required for data communication. The network nodes may include an electronic computer, a server, a mobile phone, and so on. The network nodes may access the Internet through various methods. For example, an electronic computer is equipped with a plurality of network cards, and the respective network cards may access the Internet through the network services provided by different network operators. For another example, a mobile phone may access the Internet through Wireless Fidelity (WiFi) or may access the Internet through the mobile communication service.

A network access method corresponds to at least one transmission link, that is, multiple transmission links may be used for data transmission between network nodes. In related technologies, when a network node transmits data to other network node, the network node usually splits the data into a plurality of pieces of sub-data, and sends the pieces of sub-data to the other network node through multiple transmission links. After receiving all pieces of sub-data, the other network node merges the pieces of sub-data into the complete data.

Although the data transmission between network nodes may be realized by using the above method, the transmission delays of different transmission links are inconsistent, and the complete data is obtained by merging all pieces of sub-data only when the all pieces of sub-data are received by the other network node. As such, the overall data transmission delay between network nodes is affected by the transmission link with the largest transmission delay. That is, when the transmission links for transmitting a plurality of pieces of sub-data include the transmission link with the largest transmission delay, the data transmission efficiency between network nodes is low.

## Summary

The disclosure provides a data transmission method and apparatus, an electronic device and a storage medium, so as to improve the data transmission efficiency.

According to a first aspect of the embodiments of the disclosure, there is provided a data transmission method, including:

obtaining a plurality of pieces of sub-data of data to be transmitted;

determining a tolerant delay upper limit according to transmission delays of available transmission links, wherein the tolerant delay upper limit is greater than a minimum transmission delay among the transmission delays of the available transmission links;

calculating a selection probability of each available transmission link to be selected for sub-data transmission based on the tolerant delay upper limit and the transmission delays of the available transmission links;

allocating the plurality of pieces of sub-data to the available transmission links according to selection probabilities of the available transmission links, and transmitting each piece of sub-data through an available transmission link allocated to the each piece of sub-data.

According to a second aspect of the embodiments of the disclosure, there is provided a data transmission apparatus, including:

a data obtaining module, configured to obtain a plurality of pieces of sub-data of data to be transmitted;

a delay upper limit determining module, configured to determine a tolerant delay upper limit according to transmission delays of available transmission links, wherein the tolerant delay upper limit is greater than a minimum transmission delay among the transmission delays of the available transmission links;

a probability calculation module, configured to calculate a selection probability of each available transmission link to be selected for sub-data transmission based on the tolerant delay upper limit and the transmission delays of the available transmission links;

a link allocation module, configured to allocate the plurality of pieces of sub-data to the available transmission links according to selection probabilities of the available transmission links;

a data transmission module, configured to transmit each piece of sub-data through an available transmission link allocated to the each piece of sub-data.

According to a third aspect of embodiments of the disclosure, an electronic device is provided, which includes:

a processor;
a memory for storing instructions that can be executed by the processor;
wherein the processor is configured to execute the instructions to implement the data transmission method described in the first aspect.

According to a fourth aspect of the embodiments of the disclosure, there is provided a storage medium. When instructions in the storage medium are executed by a processor of an electronic device, the electronic device can perform the data transmission method described in the first aspect.

When the technical solution provided by the embodiments of the disclosure is applied for data transmission, more sub-data is transmitted through a transmission link with high transmission efficiency, and less sub-data is transmitted through a transmission link with low transmission efficiency, so as to make more use of the transmission link with high transmission efficiency for data transmission, reduce the overall transmission delay, and thus improve the data transmission efficiency.

## Brief Description of the Drawings

FIG. 1 illustrates a flowchart of a data transmission method according to an exemplary embodiment.
FIG. 2 illustrates a diagram describing a network connection mode according to an exemplary embodiment.
FIG. 3 illustrates a diagram of a transmission link of a network node according to an exemplary embodiment.
FIG. 4 illustrates a structural diagram of a data transmission apparatus according to an exemplary embodiment.
FIG. 5 illustrates a block diagram of a data transmission apparatus according to an exemplary embodiment.
FIG. 6 illustrates a block diagram of another data transmission apparatus according to an exemplary embodiment.

## Detailed Description

In order to enable those ordinary skilled in the art to better understand the technical solutions of the disclosure, the technical solutions in the embodiments of the disclosure will be described clearly and completely with reference to the accompanying drawings.

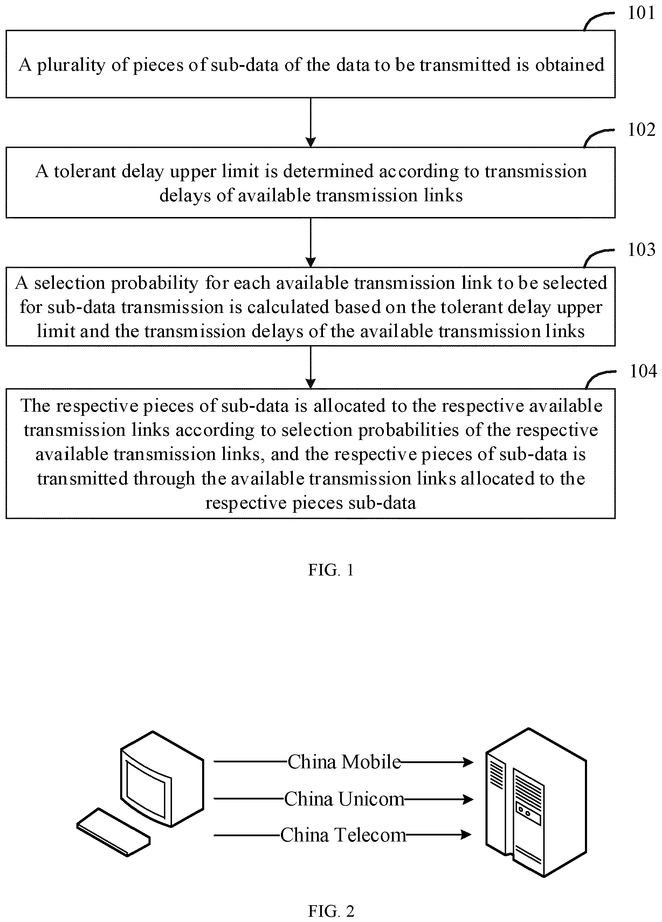

FIG. 1 is a flowchart of a data transmission method according to an exemplary embodiment. As shown in FIG. 1, the above method includes the following steps 101 to 104.
At step 101, a plurality of pieces of sub-data of the data to be transmitted is obtained.

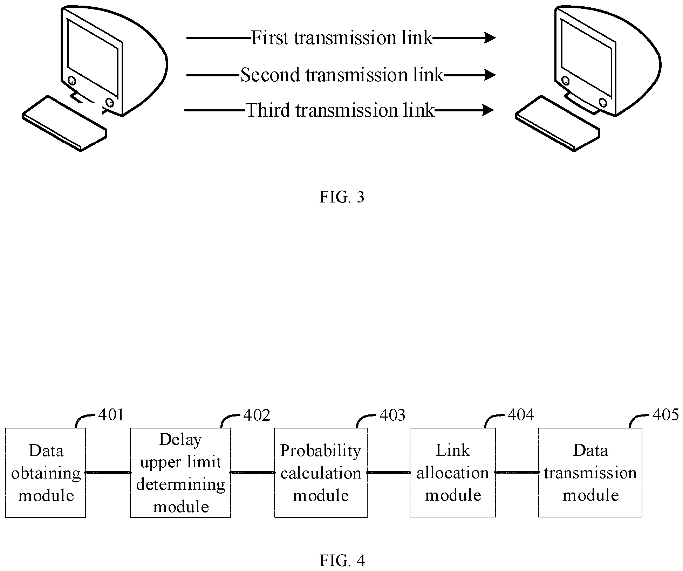

Here, the data to be transmitted is data that needs to be transmitted between network nodes. For example, in a voice call scenario, the data to be transmitted may be audio data; and in a live streaming scenario, the data to be transmitted may be audio data and video data.
It may take a long time to transmit the data to be transmitted through one transmission link since the storage space occupied by the data to be transmitted is usually large. In order to improve the transmission efficiency and reduce the transmission delay, the data to be transmitted may be split into a plurality of pieces of sub-data, so as to allocate the plurality of pieces of sub-data to a plurality of transmission links for transmission. After receiving all pieces of sub-data, the data receiving end merges all pieces of sub-data into the complete data, so as to reduce the transmission time and improve the transmission efficiency.
In embodiments of the disclosure, when the data to be transmitted is split, each piece of sub-data may be marked with a serial number. For example, the serial numbers may be digits "1, 2, 3...", etc., or may be letters "a, b, c...", etc., thereby facilitating the data receiving end to merge the sub-data after receiving the respective pieces of sub-data.
In some embodiments, the splitting of the data to be transmitted may be implemented as splitting the data to be transmitted into a preset number of pieces of sub-data. For example, the data to be transmitted may be split into 5 pieces of sub-data, 10 pieces of sub-data, 20 pieces of sub-data, etc.; or the data to be transmitted may be split into pieces of sub-data each occupying a storage space with preset size, for example, the data to be transmitted may be split into pieces of sub-data each occupying a storage space of 20 bytes.
At step 102, a tolerant delay upper limit is determined according to transmission delays of available transmission links.
Here, the available transmission link is a link that can be used for data transmission between network nodes. There are usually a plurality of transmission links between network nodes, where open and unblocked transmission links are available links. There may also be transmission links for transmitting the designated data, and blocked transmission links, both of which are unavailable transmission links.
The network nodes may access the Internet according to various methods. For example, as shown in FIG. 2, an electronic computer is equipped with a plurality of network cards, and the respective network cards may access the Internet through the network services provided by different network operators. For example, the network operators may be China Mobile, China Unicom, China Telecom, etc. Each network access method corresponds to at least one transmission link, that is, multiple transmission links may be established between network nodes for data transmission. As shown in FIG. 3, three transmission links are established between network nodes for data transmission.

The transmission delay of each transmission link is a delay of the transmission link when transmitting data. The size of the transmission delay is related to the bandwidth of the transmission link, the size of the storage space occupied by the transmitted data, and the amount of data that the transmission link needs to transmit.

In embodiments of the disclosure, in order to obtain the transmission delay of each transmission link, a detection packet may be sent through the transmission link, and the sending moment of the detection packet is recorded. After receiving the detection packet, the data receiving end returns the detection packet back. At this time, the returned detection packet is received and the receiving moment is recorded. According to the sending moment and the receiving moment described above, the transmission delay of the transmission link may be calculated.

For example, it is assumed that the sending moment of the detection packet is the moment of $0^{th}$ millisecond and the receiving moment is the moment of 0.6th millisecond. Based on this, the transmission delay RTT (Round-Trip Time) of the transmission link is calculated as:

$$RTT=(0.6-0)/2=0.3 \text{ milliseconds.}$$

In embodiments of the disclosure, in order to obtain the transmission delay of each transmission link, the sending moment at which the sub-data of the data to be transmitted is sent through the transmission link may also be recorded. After receiving the sub-data, the data receiving end returns ACK (Acknowledgement) data, and the receiving moment at which the data sending end receives the ACK data is recorded. According to the sending moment and the receiving moment described above, the transmission delay of the transmission link may be calculated. In this way, it is not necessary to send the detection packet separately in the transmission link, but directly send the sub-data of the data to be transmitted, so as to avoid the occupation of resources by the detection packet and improve the data transmission efficiency.

The above-mentioned tolerant delay upper limit is greater than the minimum transmission delay among the transmission delays of the available transmission links.

For example, assuming that the transmission delays of the available transmission links are 0.2 milliseconds, 0.3 milliseconds, and 0.5 milliseconds respectively, then the minimum transmission delay is 0.2 milliseconds, so the tolerant delay upper limit is greater than 0.2 milliseconds.

The minimum transmission delay among the transmission delays of the available transmission links may be regarded as the minimum delay. For the transmission link with the minimum transmission delay, the transmission link has the highest transmission efficiency. When a plurality of transmission links are used to transmit data, the used transmission links may include links with lower transmission efficiency than the above transmission link, so the overall transmission delay may be greater than the above minimum delay; when only the transmission link with the minimum transmission delay is used to transmit a plurality of pieces of sub-data, the transmission link may be congested, reducing the transmission efficiency, and also causing the overall transmission delay to be greater than the above minimum delay. The tolerant delay upper limit may represent the overall transmission delay acceptable to users, that is, the tolerant delay upper limit is greater than the above minimum delay.

In embodiments of the disclosure, the tolerant delay upper limit may be less than the maximum transmission delay among the transmission delays of the available transmission links when the transmission delays of the available transmission links are not a same value. Since the transmission efficiencies of the transmission links may be inconsistent, the transmission delays of the transmission links are also different. There are transmission links with lower transmission delay and also transmission links with higher transmission delay in the transmission links. When all transmission links are used to transmit data in parallel, the transmission links with higher transmission delay will cause a higher overall transmission delay. By limiting the tolerant delay upper limit to be less than the maximum transmission delay, the impact of the transmission links with higher transmission delay on the overall transmission delay may be reduced, and the transmission efficiency may be further improved.

In embodiments of the disclosure, the tolerant delay upper limit $RTT_r$ may be determined according to a following formula:

$$RTT_r=\alpha \min (RTT_i)$$

here $\alpha$ is a tolerance coefficient preset according to a requirement of an application scenario for data transmission delay, and $\alpha$ is greater than 1. The value of the tolerant delay upper limit is related to the value of the tolerance coefficient $\alpha$. The larger the tolerance coefficient, the greater the tolerant delay upper limit; and the smaller the tolerance coefficient, the less the tolerant delay upper limit. The specific value of the tolerant delay upper limit may be determined according to the application scenario. For example, in a scenario such as voice call or video call, the requirement for transmission delay is higher, and a smaller tolerance coefficient needs to be selected; in a scenario such as live streaming or on-demand, the requirement for transmission delay is lower, and a larger tolerance coefficient may be selected.

$RTT_i$ represents the transmission delay of the $i^{th}$ transmission link. Min function is used to find the minimum value among various values. The expression of $\min (RTT_i)$ represents the minimum transmission delay among the transmission delays of the available transmission links, that is, the minimum delay.

Assuming that the transmission delays of the transmission links are 0.2 milliseconds, 0.3 milliseconds and 0.5 milliseconds respectively and that the tolerance coefficient α is 2, then the tolerant delay upper limit $RTT_r$ is:

$$RTT_r = 2 * \min(0.2\ 0.3\ 0.5) = 0.4 \text{ milliseconds.}$$

In embodiments of the disclosure, the tolerance coefficient may be less than an upper limit threshold, here the upper limit threshold is a ratio of the maximum transmission delay to the minimum delay among the transmission delays of the available transmission links. For example, assuming that the maximum transmission delay is 0.4 milliseconds and the minimum delay is 0.2 milliseconds, then the upper limit threshold is 2. Thus, it can be ensured that the tolerant delay upper limit is less than the maximum transmission delay among the transmission delays of the available transmission links. By limiting the tolerant delay upper limit to be less than the maximum transmission delay, the impact of the transmission links with higher transmission delay on the overall transmission delay may be reduced, and the transmission efficiency may be further improved.

In embodiments of the disclosure, an increase in the tolerant delay upper limit relative to the minimum delay may be preset, and the tolerant delay upper limit is determined according to the sum of the minimum delay and the increase. The increase may be 5 milliseconds, 1 millisecond, 0.2 milliseconds, etc. Assuming that the minimum delay is 0.2 milliseconds and the preset increase is 0.3 milliseconds, then the tolerant delay upper limit is 0.5 milliseconds.

In embodiments of the disclosure, the tolerant delay upper limit may also be preset. The tolerant delay upper limit may be preset according to the user's needs, network bandwidth, application scenario, etc.

At step 103, a selection probability for each available transmission link to be selected for sub-data transmission is calculated based on the tolerant delay upper limit and the transmission delays of the available transmission links.

In embodiments of the disclosure, the selection probability Pi of each transmission link may be calculated according to the following formula:

$$P_i = \frac{\max(RTT_r - RTT_i,\ 0)}{\sum_{i=1}^{N} \max(RTT_r - RTT_i,\ 0)}$$

here N represents the total number of transmission links, $RTT_i$ represents the transmission delay of the $i^{th}$ transmission link, max function is used to find the maximum of all values, $RTT_r$ represents the tolerant delay upper limit, and Pi represents the selection probability of the $i^{th}$ available transmission link;

here max $(RTT_r - RTT_i, 0)$ returns the larger one of the difference value $RTT_r - RTT_i$ and 0, and may be understood as the delay redundancy of the transmission link, that is, the redundant delay of the transmission delay of the transmission link with respect to the tolerant delay upper limit.

For example, when the difference value $(RTT_r - RTT_i)$ is a value greater than 0, such as 2, 3, 0.5, etc., then max $(RTT_r - RTT_i, 0)$ returns the difference value $RTT_r - RTT_i$.

When the difference value $(RTT_r - RTT_i)$ is a value less than 0, such as -2, -3, -0.5, etc., then max $(RTT_r - RTT_i, 0)$ returns 0.

When max $(RTT_r - RTT_i, 0)$ returns 0, it means that the calculated selection probability is 0.

That is, the transmission link with a transmission delay greater than the tolerant delay upper limit may not be selected, so as to select a transmission link with a transmission delay less than the tolerant delay upper limit to transmit the sub-data, thus improving the overall transmission efficiency.

It should be noted that the transmission delay of each transmission link is not fixed due to the existence of network jitter and other reasons. Therefore, for the transmission link with the transmission delay greater than the tolerant delay upper limit, the transmission delay of the transmission link may be continuously obtained. Thus, when the transmission delay of the transmission link is reduced to below the tolerant delay upper limit, the transmission link can be used for data transmission. $\sum_{i=1}^{N}$ max $(RTT_r - RTT_i, 0)$ function is used for the summation calculation, that is, calculating the sum of the delay redundancies from the first transmission link to the $N^{th}$ transmission link.

In the foregoing embodiment, the selection probability of each transmission link is obtained by calculating the ratio of the delay redundancy of each transmission link to the total delay redundancy. Thus, the greater the delay redundancy of the transmission link, that is, the smaller the transmission delay of the transmission link, the greater the probability that the transmission link is selected for data transmission; and conversely, the less the delay redundancy of the transmission link, that is, the larger the transmission delay of the transmission link, the less the probability that the transmission link is selected for data transmission.

For example, assuming that there are three available transmission links, the transmission delay of the first transmission link is 0.2 milliseconds, the transmission delay of the second transmission link is 0.3 milliseconds, the transmission delay of the third transmission link is 0.5 milliseconds, and the tolerant delay upper limit is 0.4 milliseconds, then the probability that the first transmission link is selected is:

$$P1 = \frac{\max(RTT_r - RTT_i,\ 0)}{\sum_{i=1}^{N} \max(RTT_r - RTT_i,\ 0)} = \frac{0.2}{0.2 + 0.1 + 0} = \frac{2}{3}.$$

The probability that the second transmission link is selected is:

$$P2 = \frac{\max(RTT_r - RTT_i,\ 0)}{\sum_{i=1}^{N} \max(RTT_r - RTT_i,\ 0)} = \frac{0.1}{0.2 + 0.1 + 0} = \frac{1}{3}.$$

The probability that the third transmission link is selected is:

$$P3 = 0.$$

In embodiments of the disclosure, when calculating the selection probability of a transmission link, it is also possible to firstly select transmission links with a transmission delay less than the tolerant delay upper limit, and then calculate the selection probability of each of the transmission links with the transmission delay less than the tolerant delay upper limit. Thus, when calculating the probability, there is no need to calculate the selection probability of each transmission link, thereby saving computing resources and improving the computing efficiency.

At step 104, respective pieces of sub-data are allocated to the respective available transmission links according to selection probabilities of the respective available transmission links, and the respective pieces of sub-data is transmitted through the available transmission links allocated to the respective pieces sub-data.

In embodiments of the disclosure, the respective pieces of sub-data may be allocated according to the selection probability of each transmission link. In some embodiments, the amount of sub-data allocated to each transmission link is the product of the total amount of sub-data and the selection probability of the transmission link. For example, assuming there are 100 pieces of sub-data in total and the selection probability of the first transmission link is 1/5, then 20 pieces of sub-data are allocated to the first transmission link.

In embodiments of the disclosure, for each piece of sub-data, the sub-data may be allocated to the transmission link with the highest current selection probability, and the selection probability of each transmission link is recalculated when the next piece of sub-data is allocated.

In embodiments of the disclosure, for each piece of sub-data, it is possible to firstly determine a random number for judging the range of a sum of selection probabilities of the available transmission links, determine the $i^{th}$ transmission link that satisfies the following formula according to the random number, and allocate the sub-data to the determined $i^{th}$ transmission link:

$$\sum_{k=1}^{i-1} P_k \le r < \sum_{k=1}^{i} P_k$$

here r represents the determined random number, $P_k$ represents the selection probability of the $k^{th}$ transmission link, and the random number is greater than or equal to 0 and less than 1. $\sum_{k=1}^{i-1} P_k$ represents the sum of the selection probabilities from the first transmission link to the $(i-1)^{th}$ transmission link, and $\sum_{k=1}^{i} P_k$ represents the sum of the selection probabilities from the first transmission link to the $i^{th}$ transmission link.

For example, it is assumed that there are three available transmission links in total, the selection probability of the first transmission link is 0.2, the selection probability of the second transmission link is 0.3, and the selection probability of the third transmission link is 0.5.

Assuming that the random number is 0.1, then the random number is less than the selection probability of the first transmission link, so the transmission link determined by the above formula is the first transmission link, and thus the sub-data is allocated to the first transmission link.

Assuming that the random number is 0.4, then the random number is greater than the selection probability of the first transmission link and less than the sum (0.5) of the selection probabilities of the first and second transmission links, so the transmission link determined by the above formula is the second transmission link, and thus the sub-data is allocated to the second transmission link.

Assuming that the random number is 0.8, then the random number is greater than the sum of the selection probabilities of the first and second transmission links and less than the sum (1) of the selection probabilities of the first, second and third transmission links, so the transmission link determined by the above formula is the second transmission link, and thus the sub-data is allocated to the second transmission link.

Since the random number is randomly generated, the determination of the transmission link for transmitting the sub-data according to the random number can balance the probability of each transmission link being used to transmit the sub-data, and avoid the situation that the transmission link with high selection probability is widely used and the transmission link with low selection probability is rarely used. For example, in the case when the random number is 0, the transmission link with a selection probability of 0 may also be used to transmit sub-data.

In order to understand the above solution more intuitively, the range from the sum of first probabilities to the sum of second probabilities may be taken as the selection interval in which each transmission link is selected for data transmission, where for the $i^{th}$ transmission link, the sum of first probabilities is the sum of selection probabilities from the first transmission link to the $(i-1)^{th}$ transmission link, and the sum of second probabilities is the sum of selection probabilities from the first transmission link to the $i^{th}$ transmission link. In this way, the allocated transmission link may be selected according to the selection interval where the random number is located.

For example, it is assumed that there are three available transmission links in total, the selection probability of the first transmission link is 0.2, the selection probability of the second transmission link is 0.3, and the selection probability of the third transmission link is 0.5. Thus, for the first transmission link, the selection interval is [0, 0.2), the selection interval of the second transmission link is [0.2, 0.5), and the selection interval of the third transmission link is [0.5, 1).

If the random number is 0.1, the sub-data is allocated to the first transmission link; if the random number is 0.7, the sub-data is allocated to the third transmission link.

For each piece of sub-data, the transmission link may be allocated in the above manner until all pieces of sub-data are allocated.

It should be noted that the "first transmission link", "second transmission link" and "ith transmission link" mentioned in the above steps refer to the calculation sequence of transmission delays and selection probabilities for transmission links. In some embodiments, calculations may be performed for transmission links randomly, or calculations may be performed in the order of transmission delays from large to small, or calculations may be performed in the distribution order of transmission links, etc., which is not limited in the disclosure.

When the technical solution provided in the above embodiment is applied for data transmission, a plurality of pieces of sub-data of the data to be transmitted are obtained, the tolerant delay upper limit is determined according to the transmission delays of the available transmission links, and the selection probability of each available transmission link to be selected for sub-data transmission is calculated based on the tolerant delay upper limit and the transmission delays of the available transmission links, where the smaller the transmission delay of the transmission link, the greater the selection probability thereof; and the larger the transmission delay of the transmission link, the less the selection probability thereof. The respective pieces of sub-data are allocated to the available transmission links according to the selection probability of each available transmission link, and each piece of sub-data is transmitted through an available transmission links allocated to the sub-data. Thus, a transmission link with a smaller transmission delay has a higher probability of being selected to transmit sub-data, and a transmission link with a large transmission delay has a lower probability of being selected to transmit sub-data. The transmission link with the smaller transmission delay has high transmission efficiency, and the transmission link with the larger transmission delay has low transmission efficiency. That is, more sub-data is transmitted through the transmission link with high transmission efficiency, and less sub-data is transmitted through the transmission link with low transmission efficiency. As can be seen, when the solution provided in the foregoing embodiment is applied for data transmission, more use of the transmission link with high transmission efficiency for data transmission can reduce the overall transmission delay, and thus improve the data transmission efficiency.

FIG. 4 is a structural diagram of a data transmission apparatus according to an exemplary embodiment. As shown in FIG. 4, the above-mentioned apparatus includes:

a data obtaining module 401, configured to obtain a plurality of pieces of sub-data of data to be transmitted;

a delay upper limit determining module 402, configured to determine a tolerant delay upper limit according to transmission delays of available transmission links, wherein the tolerant delay upper limit is greater than a minimum transmission delay among the transmission delays of the available transmission links;

a probability calculation module 403, configured to calculate a selection probability of each available transmission link to be selected for sub-data transmission based on the tolerant delay upper limit and the transmission delays of the available transmission links;

a link allocation module 404, configured to allocate respective pieces of sub-data to the respective available transmission links according to selection probabilities of the respective available transmission links;

a data transmission module 405, configured to transmit the respective pieces of sub-data through the available transmission links allocated to the respective pieces sub-data.

In embodiments of the disclosure, the delay upper limit determining module 402 is configured to:

determine the tolerant delay upper limit $RTT_r$ according to a following formula:

$$RTT_r = \alpha \min (RTT_i)$$

here the $\alpha$ is a tolerance coefficient preset according to a requirement of an application scenario for data transmission delay, the $\alpha$ is greater than 1, and the $RTT_i$ represents a transmission delay of an $i^{th}$ available transmission link; or
preset an increase of the tolerant delay upper limit relative to the minimum transmission delay, and determine the tolerant delay upper limit according to a sum of the minimum transmission delay and the increase.

In embodiments of the disclosure, the tolerance coefficient is less than an upper limit threshold, wherein the upper limit threshold is a ratio of a maximum transmission delay to the minimum transmission delay among the transmission delays of the available transmission links.

In embodiments of the disclosure, the probability calculation module 403 is configured to:

calculate the selection probability Pi of each available transmission link according to a following formula:

$$P_i = \frac{\max{(RTT_r - RTT_i,\ 0)}}{\sum_{i=1}^{N} \max{(RTT_r - RTT_i,\ 0)}}$$

here the N represents a total number of available transmission links, the $RTT_i$ represents a transmission delay of an $i^{th}$ available transmission link, the $RTT_r$ represents the tolerant delay upper limit, and the Pi represents a selection probability of the $i^{th}$ available transmission link.

In embodiments of the disclosure, the link allocation module 404 is configured to:

for each piece of sub-data, determine a random number for judging a range of a sum of selection probabilities of the available transmission links, determine an $i^{th}$ transmission link that satisfies a following formula according to the random number, and allocate sub-data to the determined $i^{th}$ transmission link:

$$\sum_{k=1}^{i-1} P_k \leq r < \sum_{k=1}^{i} P_k$$

here the r represents the determined random number, the $P_k$ represents a selection probability of a $k^{th}$ available transmission link, and the random number is greater than or equal to 0 and less than 1.

In embodiments of the disclosure, the apparatus includes a time delay obtaining module, and the time delay obtaining module is configured to:

for each transmission link, record a sending moment at which detection data is sent by the transmission link, and record a receiving moment at which ACK data is received, wherein the detection data includes a detection packet or sub-data of the data to be transmitted, and the ACK data is data returned by a data receiving end after receiving the detection data; calculate a transmission delay of the transmission link according to the sending moment and the receiving moment.

In embodiments of the disclosure, the tolerant delay upper limit is less than a maximum among the transmission delays of the available transmission links when the transmission delays of the available transmission links are not a same value.

When the technical solution provided in the above embodiment is applied for data transmission, a plurality of pieces of sub-data of the data to be transmitted are obtained, the tolerant delay upper limit is determined according to the transmission delays of the available transmission links, and the selection probability of each available transmission link to be selected for sub-data transmission is calculated based on the tolerant delay upper limit and the transmission delays of the available transmission links, wherein the smaller the transmission delay of the transmission link, the greater the selection probability thereof; and the larger the transmission delay of the transmission link, the less the selection probability thereof. The pieces of sub-data are allocated to available transmission links according to the selection probability of each available transmission link, and each piece of sub-data is transmitted through an available transmission link allocated to the sub-data. Thus, a transmission link with a smaller transmission delay has a higher probability of being selected to transmit sub-data, and a transmission link with a large transmission delay has a lower probability of being selected to transmit sub-data. The transmission link with the smaller transmission delay has high transmission efficiency, and the transmission link with the larger transmission delay has low transmission efficiency. That is, more sub-data is transmitted through the transmission link with high transmission efficiency, and less sub-data is transmitted through the transmission link with low transmission efficiency. As can be seen, when the solution provided in the foregoing embodiment is applied for data transmission, more use of the transmission link with high transmission efficiency for data transmission can reduce the overall transmission delay, and thus improve the data transmission efficiency.

Regarding the apparatus in the above embodiment, the specific manner in which each module performs the operations has been described in detail in the embodiment related to the method, and will not be illustrated in detail here.

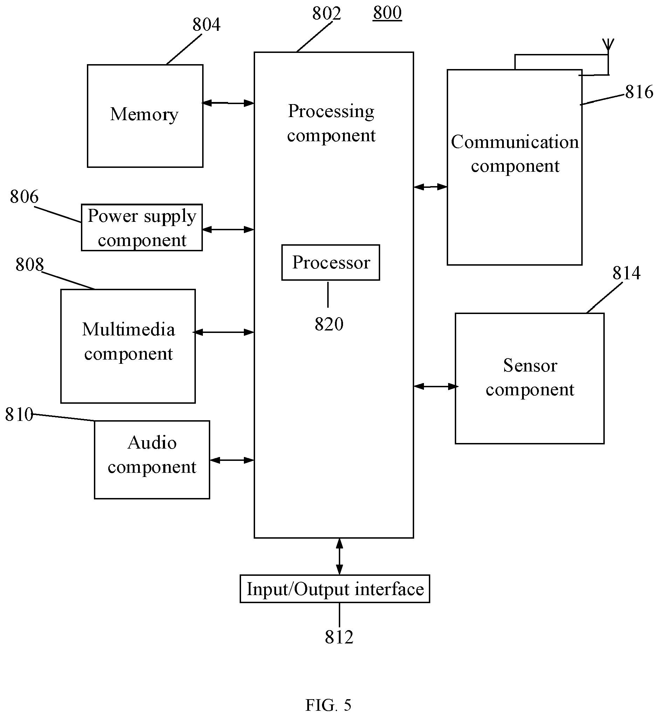

FIG. 5 is a block diagram of an electronic device 800 for data transmission according to an exemplary embodiment. For example, the electronic device 800 may be a mobile phone, computer, digital broadcasting terminal, message transceiver, game console, tablet device, medical device, fitness device, personal digital assistant, or the like.

Referring to FIG. 8, the electronic device 800 may include one or more of a processing component 802, a memory 804, a power supply component 806, a multimedia component 808, an audio component 810, an Input/Output (I/O) interface 812, a sensor component 814, and a communication component 816.

The processing component 802 generally controls the overall operations of the electronic device 800, such as operations associated with display, phone call, data communication, camera operation, and recording operation. The processing component 802 may include one or more processors 820 to execute instructions to complete all or a part of the steps of the above method. In addition, the processing component 802 may include one or more modules to facilitate the interactions between the processing component 802 and other components. For example, the processing component 802 may include a multimedia module to facilitate the interactions between the multimedia component 808 and the processing component 802.

The memory 804 is configured to store various types of data to support the operations in the electronic device 800. Examples of the data include instructions of any application program or method, contact person data, phone book data, messages, pictures, videos and others operated on the electronic device 800. The memory 804 may be implemented by any type of volatile or nonvolatile storage device or a combination thereof, such as Static Random-Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, magnetic disk or optical disk.

The power supply component 806 provides power for various components of the electronic device 800. The power supply component 806 may include a power management system, one or more power supplies, and other components associated with generating, managing and distributing the power for the electronic device 800.

The multimedia component 808 includes a screen of an output interface provided between the electronic device 800 and the user. In some embodiments, the screen may include a Liquid Crystal Display (LCD) and a Touch Panel (TP). If the screen includes a touch panel, the screen may be implemented as a touch screen to receive input signals from the user. The touch panel includes one or more touch sensors to sense the touching, the sliding, and the gestures on the touch panel. The touch sensor may not only sense the boundary of the touching or sliding operation, but also detect the duration and pressure related to the touching or sliding operation. In some embodiments, the multimedia component 808 includes a front camera and/or a rear camera. When the device 800 is in the operation mode such as shooting mode or video mode, the front camera and/or the rear camera may receive the external multimedia data. Each of the front camera and rear camera may be a fixed optical lens system or have the focal length and the optical zoom capability.

The audio component 810 is configured to output and/or input audio signals. For example, the audio component 810 includes a microphone (MIC). When the electronic device 800 is in the operation mode such as call mode, recording mode and voice recognition mode, the microphone is configured to receive the external audio signals. The received audio signals may be further stored in the memory 804 or transmitted via the communication component 816. In some embodiments, the audio component 810 further includes a speaker for outputting the audio signals. The I/O interface 812 provides an interface between the processing component 802 and a peripheral interface module, where the above peripheral interface module may be a keyboard, a click wheel, buttons or the like. These buttons may include but not limited to: home button, volume button, start button, and lock button.

The sensor component 814 includes one or more sensors for providing the electronic device 800 with the state assessments in various aspects. For example, the sensor component 814 may detect the opening/closing state of the device 800, and the relative positioning of the components (for example, the display and keypad of the electronic device 800). The sensor component 814 may further detect the position change of the electronic device 800 or a component of the electronic device 800, the presence or absence of contact of the user with the electronic device 800, the orientation or acceleration/deceleration of the electronic device 800, and the temperature change of the electronic device 800. The sensor component 814 may include a proximity sensor configured to detect the presence of nearby objects with no physical contact. The sensor component 814 may further include a light sensor, such as Complementary Metal Oxide Semiconductor (CMOS) or Charge Coupled Device (CCD) image sensor, for use in the imaging applications. In some embodiments, the sensor component 814 may further include an acceleration sensor, a gyro sensor, a magnetic sensor, a pressure sensor, or a temperature sensor.

The communication component 816 is configured to facilitate the wired or wireless communications between the electronic device 800 and other devices. The electronic device 800 may access a wireless network based on a communication standard, such as WiFi, operator network (e.g., 2G, 3G, 4G or 5G), or a combination thereof. In an exemplary embodiment, the communication component 816 receives the broadcast signal or broadcast related information from an external broadcast management system via a broadcast channel. In an exemplary embodiment, the communication component 816 further includes a Near Field Communication (NFC) module to facilitate the short-range communications. For example, the NFC module may be implemented based on the Radio Frequency Identification (RFID) technology, Infrared Data Association (IrDA) technology, Ultra Wideband (UWB) technology, Bluetooth (BT) technology and other technologies.

In an exemplary embodiment, the electronic device 800 may be implemented by one or more Application Specific Integrated Circuits (ASICs), Digital Signal Processors (DSPs), Digital Signal Processing Devices (DSPDs), Programmable Logic Devices (PLDs), Field-Programmable Gate Arrays (FPGAs), controllers, microcontrollers, microprocessors or other electronic elements to perform the above method.

In an exemplary embodiment, there is further provided a storage medium including instructions, for example, the memory 804 including instructions, where the above instructions can be executed by the processor 820 of the electronic device 800 to complete the above method. Optionally, the storage medium may be a non-transitory computer readable storage medium. For example, the non-transitory computer readable storage medium may be Read Only Memory (ROM), Random Access Memory (RAM), Compact Disk Read Only Memory (CD-ROM), magnetic tape, floppy disk, optical data storage device, etc.

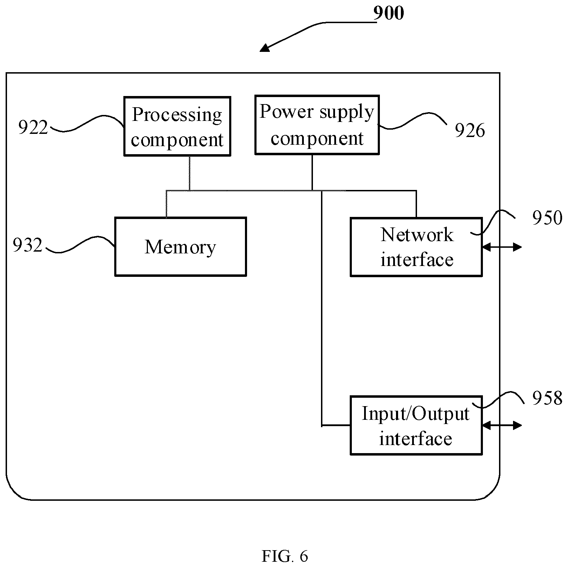

FIG. 6 is a block diagram of an electronic device 900 for data transmission according to an exemplary embodiment. For example, the electronic device 900 may be provided as a server. Referring to FIG. 6, the electronic device 900 includes a processing component 922 which further includes one or more processors, and the memory resource represented by a memory 932 for storing instructions (e.g., applications) that can be executed by the processing component 922. The application program stored in the memory 932 may include one or more modules, each of which corresponds to a set of instructions. In addition, the processing component 922 is configured to execute the instructions to perform the following steps:

    obtaining a plurality of pieces of sub-data of data to be transmitted;
    determining a tolerant delay upper limit according to transmission delays of available transmission links, wherein the tolerant delay upper limit is greater than a minimum transmission delay among the transmission delays of the available transmission links;
    calculating a selection probability of each available transmission link to be selected for sub-data transmission based on the tolerant delay upper limit and the transmission delays of the available transmission links;
    allocating respective pieces of sub-data to the respective available transmission links according to selection probabilities of the respective available transmission links, and transmitting the respective pieces of sub-data through the available transmission links allocated to the respective pieces sub-data.

In embodiments of the disclosure, the step of determining the tolerant delay upper limit according to the transmission delays of the available transmission links includes:

    determining the tolerant delay upper limit $RTT_r$ according to a following formula:

$$RTT_r = \alpha \min(RTT_i)$$

    here the $\alpha$ is a tolerance coefficient preset according to a requirement of an application scenario for data transmission delay, the $\alpha$ is greater than 1, and the $RTT_i$ represents a transmission delay of an $i^{th}$ available transmission link; or
    presetting an increase of the tolerant delay upper limit relative to the minimum transmission delay, and determining the tolerant delay upper limit according to a sum of the minimum transmission delay and the increase.

In embodiments of the disclosure, the tolerance coefficient is less than an upper limit threshold, wherein the upper limit threshold is a ratio of a maximum transmission delay to the minimum transmission delay among the transmission delays of the available transmission links.

In embodiments of the disclosure, the step of calculating a selection probability for each available transmission link to be selected for sub-data transmission based on the tolerant delay upper limit and the transmission delays of the available transmission links includes:

    calculating the selection probability Pi of each available transmission link according to a following formula:

$$Pi = \frac{\max(RTT_r - RTT_i, \ 0)}{\sum_{i=1}^{N} \max(RTT_r - RTT_i, \ 0)}$$

    here the N represents a total number of available transmission links, the $RTT_i$ represents a transmission delay of an $i^{th}$ available transmission link, the $RTT_r$ represents the tolerant delay upper limit, and the Pi represents a selection probability of the $i^{th}$ available transmission link.

In embodiments of the disclosure, the step of allocating respective pieces of sub-data to the respective available transmission links according to selection probabilities of the respective available transmission links includes:

    for each piece of sub-data, determining a random number for judging a range of a sum of selection probabilities of the available transmission links, determining an $i^{th}$ transmission link that satisfies a following formula according to the random number, and allocating sub-data to the determined $i^{th}$ transmission link:

$$\sum_{k=1}^{i-1} P_k \leq r < \sum_{k=1}^{i} P_k$$

here the r represents the determined random number, the $P_k$ represents a selection probability of a $k^{th}$ available transmission link, and the random number is greater than or equal to 0 and less than 1.

In embodiments of the disclosure, a transmission delay of each available transmission link is obtained in a following way:

for each transmission link, recording a sending moment at which detection data is sent by the transmission link, and recording a receiving moment at which ACK data is received, wherein the detection data includes a detection packet or sub-data of the data to be transmitted, and the ACK data is data returned by a data receiving end after receiving the detection data;
calculating a transmission delay of the transmission link according to the sending moment and the receiving moment.

In embodiments of the disclosure, the tolerant delay upper limit is less than a maximum among the transmission delays of the available transmission links when the transmission delays of the available transmission links are not a same value.

The electronic device 900 may further include: a power supply component 926 configured to perform the power management of the electronic device 900, a wired or wireless network interface 950 configured to connect the electronic device 900 to a network, and an Input/Output (I/O) interface 958. The electronic device 900 may operate based on an operating system stored in the memory 932, e.g., Windows Server™, Mac OS X™, Unix™, Linux™, FreeBSD™ or the like.

When the technical solution provided in the above embodiment is applied for data transmission, a plurality of pieces of sub-data of the data to be transmitted are obtained, the tolerant delay upper limit is determined according to the transmission delays of the available transmission links, and the selection probability of each available transmission link to be selected for sub-data transmission is calculated based on the tolerant delay upper limit and the transmission delays of the available transmission links, where the smaller the transmission delay of the transmission link, the greater the selection probability thereof; and the larger the transmission delay of the transmission link, the less the selection probability thereof. The respective pieces of sub-data are allocated to the available transmission links according to the selection probability of each available transmission link, and each piece of sub-data is transmitted through an available transmission links allocated to the sub-data. Thus, a transmission link with a smaller transmission delay has a higher probability of being selected to transmit sub-data, and a transmission link with a large transmission delay has a lower probability of being selected to transmit sub-data. The transmission link with the smaller transmission delay has high transmission efficiency, and the transmission link with the larger transmission delay has low transmission efficiency. That is, more sub-data is transmitted through the transmission link with high transmission efficiency, and less sub-data is transmitted through the transmission link with low transmission efficiency. As can be seen, when the solution provided in the foregoing embodiment is applied for data transmission, more use of the transmission link with high transmission efficiency for data transmission can reduce the overall transmission delay, and thus improve the data transmission efficiency.

**Claims**

1. A data transmission method, comprising:

obtaining a plurality of pieces of sub-data of data to be transmitted;
determining a tolerant delay upper limit according to transmission delays of available transmission links, wherein the tolerant delay upper limit is greater than a minimum transmission delay among the transmission delays of the available transmission links;
calculating a selection probability of each available transmission link to be selected for sub-data transmission based on the tolerant delay upper limit and the transmission delays of the available transmission links;
allocating the plurality of pieces of sub-data to the available transmission links according to selection probabilities of the available transmission links, and transmitting each piece of sub-data through an available transmission link allocated to the each piece of sub-data.

2. The data transmission method according to claim 1, wherein the determining the tolerant delay upper limit according to the transmission delays of the available transmission links comprises:

determining the tolerant delay upper limit $RTT_r$ according to a following formula:

$$RTT_r = \alpha \min (RTT_i)$$

wherein $\alpha$ is a tolerance coefficient preset according to a requirement of an application scenario for data transmission delay, which is greater than 1; and $RTT_i$ represents a transmission delay of an $i^{th}$ available transmission link; or presetting an increase of the tolerant delay upper limit relative to the minimum transmission delay, and determining the tolerant delay upper limit according to a sum of the minimum transmission delay and the increase.

3. The data transmission method according to claim 2, wherein the tolerance coefficient is less than an upper limit threshold, wherein the upper limit threshold is a ratio of a maximum transmission delay to the minimum transmission delay among the transmission delays of the available transmission links.

4. The data transmission method according to claim 1 or 2, wherein the calculating a selection probability of each available transmission link to be selected for sub-data transmission based on the tolerant delay upper limit and the transmission delays of the available transmission links comprises:

   calculating the selection probability Pi of each available transmission link according to a following formula:

   $$P_i = \frac{\max(RTT_r - RTT_i,\ 0)}{\sum_{i=1}^{N} \max(RTT_r - RTT_i,\ 0)}$$

   wherein N represents a total number of the available transmission links, $RTT_i$ represents a transmission delay of an $i^{th}$ available transmission link, $RTT_r$ represents the tolerant delay upper limit, and Pi represents a selection probability of the $i^{th}$ available transmission link.

5. The data transmission method according to claim 1 or 2, wherein the allocating the plurality of pieces of sub-data to the available transmission links according to selection probabilities of the available transmission links comprises:

   for each piece of sub-data, determining a random number for judging a range of a sum of selection probabilities of the available transmission links, determining an $i^{th}$ transmission link that satisfies a following formula according to the random number, and allocating the each piece of sub-data to the determined $i^{th}$ transmission link:

   $$\sum_{k=1}^{i-1} P_k \leq r < \sum_{k=1}^{i} P_k$$

wherein r represents the determined random number, $P_k$ represents a selection probability of a $k^{th}$ available transmission link, and the random number is greater than or equal to 0 and less than 1.

6. The method according to claim 1 or 2, wherein a transmission delay of each available transmission link is obtained in a following way:

   for each transmission link, recording a sending moment at which detection data is sent via the transmission link, and recording a receiving moment at which ACK data is received, wherein the detection data comprises a detection packet or a piece of sub-data of the data to be transmitted, and the ACK data is returned by a data receiving end upon receiving the detection data; calculating a transmission delay of the transmission link according to the sending moment and the receiving moment.

7. The method according to claim 1 or 2, wherein the tolerant delay upper limit is less than a maximum among the transmission delays of the available transmission links when the transmission delays of the available transmission links are not a same value.

8. A data transmission apparatus, comprising:

   a data obtaining module, configured to obtain a plurality of pieces of sub-data of data to be transmitted;
   a delay upper limit determining module, configured to determine a tolerant delay upper limit according to transmission delays of available transmission links, wherein the tolerant delay upper limit is greater than a minimum transmission delay among the transmission delays of the available transmission links;
   a probability calculation module, configured to calculate a selection probability of each available transmission link to be selected for sub-data transmission based on the tolerant delay upper limit and the transmission delays of the available transmission links;
   a link allocation module, configured to allocate the plurality of pieces of sub-data to the available transmission links according to selection probabilities of the available transmission links;
   a data transmission module, configured to transmit each piece of sub-data through an available transmission link allocated to the each piece of sub-data.

9. The data transmission apparatus according to claim 8, wherein the delay upper limit determining module is configured to:

determine the tolerant delay upper limit RTT$_r$ according to a following formula:

$$RTT_r = \alpha \min (RTT_i)$$

wherein $\alpha$ is a tolerance coefficient preset according to a requirement of an application scenario for data transmission delay, which is greater than 1; and RTT$_i$ represents a transmission delay of an $i^{th}$ available transmission link; or preset, an increase of the tolerant delay upper limit relative to the minimum transmission delay, and determine the tolerant delay upper limit according to a sum of the minimum transmission delay and the increase.

10. The data transmission apparatus according to claim 9, wherein the tolerance coefficient is less than an upper limit threshold, wherein the upper limit threshold is a ratio of a maximum transmission delay to the minimum transmission delay among the transmission delays of the available transmission links.

11. The data transmission apparatus according to claim 8 or 9, wherein the probability calculation module is configured to:

calculate the selection probability Pi of each available transmission link according to a following formula:

$$P_i = \frac{\max (RTT_r - RTT_i,\ 0)}{\sum_{i=1}^{N} \max (RTT_r - RTT_i,\ 0)}$$

wherein N represents a total number of the available transmission links, RTT$_i$ represents a transmission delay of an $i^{th}$ available transmission link, RTT$_r$ represents the tolerant delay upper limit, and Pi represents a selection probability of the $i^{th}$ available transmission link.

12. The data transmission apparatus according to claim 8 or 9, wherein the link allocation module is configured to:

for each piece of sub-data, determine a random number for judging a range of a sum of selection probabilities of the available transmission links, determine an $i^{th}$ transmission link that satisfies a following formula according to the random number, and allocate the each piece of sub-data to the determined $i^{th}$ transmission link:

$$\sum_{k=1}^{i-1} P_k \leq r < \sum_{k=1}^{i} P_k$$

wherein r represents the determined random number, P$_k$ represents a selection probability of a $k^{th}$ available transmission link, and the random number is greater than or equal to 0 and less than 1.

13. The apparatus according to claim 8 or 9, wherein the apparatus comprises a time delay obtaining module, and the time delay obtaining module is configured to:

for each transmission link, record a sending moment at which detection data is sent via the transmission link, and record a receiving moment at which ACK data is received, wherein the detection data comprises a detection packet or a piece of sub-data of the data to be transmitted, and the ACK data is returned by a data receiving end upon receiving the detection data; calculate a transmission delay of the transmission link according to the sending moment and the receiving moment.

14. The apparatus according to claim 8 or 9, wherein the tolerant delay upper limit is less than a maximum among the transmission delays of the available transmission links when the transmission delays of the available transmission links are not a same value.

15. An electronic device, comprising:

a processor;
a memory for storing instructions that can be executed by the processor;
wherein the processor is configured to execute the instructions to implement the data transmission method of any one of claims 1 to 7.

16. A storage medium, wherein instructions in the storage medium, when executed by a processor of an electronic device, enable the electronic device to perform the data transmission method of any one of claims 1 to 7.

101

A plurality of pieces of sub-data of the data to be transmitted is obtained

102

A tolerant delay upper limit is determined according to transmission delays of available transmission links

103

A selection probability for each available transmission link to be selected for sub-data transmission is calculated based on the tolerant delay upper limit and the transmission delays of the available transmission links

104

The respective pieces of sub-data is allocated to the respective available transmission links according to selection probabilities of the respective available transmission links, and the respective pieces of sub-data is transmitted through the available transmission links allocated to the respective pieces sub-data

FIG. 1

China Mobile

China Unicom

China Telecom

FIG. 2

—————First transmission link—————▶
—————Second transmission link—————▶
—————Third transmission link—————▶

FIG. 3

| Data obtaining module ⌐401 | Delay upper limit determining module ⌐402 | Probability calculation module ⌐403 | Link allocation module ⌐404 | Data transmission module ⌐405 |

FIG. 4

FIG. 5

**900**

FIG. 6

<table>
<tr><td colspan="2">**INTERNATIONAL SEARCH REPORT**</td><td>International application No.<br><br>**PCT/CN2020/117532**</td></tr>
</table>

**A. CLASSIFICATION OF SUBJECT MATTER**

H04W 28/00(2009.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNABS; CNTXT; CNKI; USTXT; WOTXT; VEN; 3GPP: 数据, 传输, 时延, 上限, 概率, 链路, 拆分, data, transmit, transfer, delay, upper limit, probability, link, resolution, split

**C. DOCUMENTS CONSIDERED TO BE RELEVANT**

| Category* | Citation of document, with indication, where appropriate, of the relevant passages | Relevant to claim No. |
|---|---|---|
| PX | CN 110719598 A (BEIJING DAJIA INTERCONNECTION INFORMATION TECHNOLOGY CO., LTD.) 21 January 2020 (2020-01-21)<br>claims 1-10 | 1-16 |
| A | CN 103841041 A (ZTE CORPORATION) 04 June 2014 (2014-06-04)<br>description, paragraphs 39-63 | 1-16 |
| A | CN 110300115 A (TENCENT TECHNOLOGY SHENZHEN CO., LTD.) 01 October 2019 (2019-10-01)<br>entire document | 1-16 |
| A | CN 101534249 A (HANGZHOU H3C TECHNOLOGIES CO., LTD.) 16 September 2009 (2009-09-16)<br>entire document | 1-16 |
| A | WO 2019101085 A1 (HUAWEI TECH CO., LTD.) 31 May 2019 (2019-05-31)<br>entire document | 1-16 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 December 2020** | **08 December 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/117532**

| Patent document cited in search report | | | Publication date (day/month/year) | Patent family member(s) | | | Publication date (day/month/year) |
|---|---|---|---|---|---|---|---|
| CN | 110719598 | A | 21 January 2020 | None | | | |
| CN | 103841041 | A | 04 June 2014 | CN | 103841041 | B | 28 December 2018 |
| | | | | WO | 2013182122 | A1 | 12 December 2013 |
| CN | 110300115 | A | 01 October 2019 | None | | | |
| CN | 101534249 | A | 16 September 2009 | CN | 101534249 | B | 04 January 2012 |
| WO | 2019101085 | A1 | 31 May 2019 | CN | 109818863 | A | 28 May 2019 |
| | | | | EP | 3697035 | A1 | 19 August 2020 |

Form PCT/ISA/210 (patent family annex) (January 2015)

**EP 4 047 981 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910978624